# EUROPEAN PATENT APPLICATION

(11) **EP 3 330 191 A1**
(43) Date of publication of application: **06.06.2018**
(21) Application number: 16203426.8
(22) Date of filing: 12.12.2016
(51) Int. Cl.: B65B 9/10, B65B 29/00, B65B 51/22, B65B 51/26, B65B 51/30, B29C 65/00, A24B 13/00

(54) **POUCH FOR AN ORAL SNUFF PRODUCT AND METHOD OF PRODUCTION**

(30) Priority: 02.12.2016 EP 16201939
(71) Applicant: Swedish Match North Europe AB, 118 85 Stockholm (SE)
(72) Inventor: PERSSON, Tony, 524 93 Herrljunga (SE)
(74) Representative: Valea AB

(57) **Abstract**

An oral pouched snuff product (1) and a method for its production. The oral pouched snuff product (1) comprises a filling material (3) and a saliva-permeable pouch enclosing the filling material, the saliva-permeable pouch comprising at least one elongated seal (13a) and the saliva-permeable pouch comprising a mesh material (5) being elastic in at least one direction and comprising fibres of thermoplastic polyamide, wherein the at least one elongated seal has a seal strength of at least 0.10 N/mm as measured in dry state as well as in wet state. The at least one elongated seal (13a) may be an ultrasonically provided weld.

## Description

### TECHNICAL FIELD

The present invention relates to an oral pouched snuff product, such as an oral pouched smokeless tobacco product, comprising a filling material, such as tobacco material, and a saliva-permeable pouch enclosing the filling material.

### BACKGROUND

Smokeless tobacco for oral use includes chewing tobacco, dry snuff and moist (wet) snuff. Generally, dry snuff has a moisture content of less than 10 wt% and moist snuff has a moisture content of above 40 wt%. Semi-dry products having between 10% to 40 wt% moisture content are also available.

Smokeless tobacco products for oral use are made from tobacco leaves, such as lamina and stem of the tobacco leaf. The material from roots and stalks are normally not utilized for production of smokeless tobacco compositions for oral use.

There are two types of moist snuff, the American type and the Scandinavian type which is also called snus. American-type moist snuff is commonly produced through a fermentation process of moisturized ground or cut tobacco. Scandinavian-type moist snuff is commonly produced by using a heat-treatment process (pasteurization). The heat-treatment is carried out in order to degrade, destroy or denature at least a portion of the microorganisms in the tobacco preparation.

Both the American-type and the Scandinavian-type of moist snuff for oral use are available in loose form or portion-packed in a saliva-permeable, porous wrapper material forming a pouch. Pouched moist snuff, including snus, is typically used by the user by placing the pouch between the upper or lower gum and the lip or cheek and retaining it there for a limited period of time. The pouch material holds the tobacco in place while allowing saliva to pass into the interior of the pouched product and allowing flavours and nicotine to diffuse from the tobacco material into the user's mouth.

The pouch material is typically made of a nonwoven fleece (soft fabric) material, such as viscose (regenerated cellulose; viscose fibres are often referred to as viscose rayon or rayon), including an acrylic polymer that acts as binder in the nonwoven material and provides for heat-sealing of the pouches during manufacturing thereof. The viscose nonwoven material normally used for pouched smokeless tobacco products is similar to the fabric used in tea bags. Nonwovens are fabrics that are neither woven nor knitted. Methods for the manufacturing of nonwoven materials are commonly known in the art.

Pouched smokeless tobacco products may be produced by measuring portions of the smokeless tobacco composition and inserting the portions into a nonwoven tube. US 4,703,765 discloses a device for packaging precise amounts of finely divided tobacco products, such as snuff tobacco or the like, in a tubular packaging material into which snuff portions are injected via a fill tube. Downstream from the tube, welding means are positioned for transverse sealing of the packaging material, and also cutting means for severing the packaging material in the area of the transverse seal to thus form discrete or individual portion packages. EP 2428450 B1 relates to a snus dosing method, wherein a portion of tobacco is filled into a dosing chamber of a dosing device and then blown out of the dosing chamber by means of blow-out air to which water vapor has been added.

Pouched smokeless tobacco products may alternatively be produced by placing portions of moist snuff on a nonwoven web using a pouch packer machine in accordance with the device disclosed in US 6,135,120. This device comprises feeding means for feeding the tobacco material into pockets formed in a rotary portioning wheel for portioning the material into portions, at least one compression means for compressing the tobacco material portions, a unit for advancing a packaging material, such as a nonwoven web, in synchrony with the compressed portions, at least one discharge means for discharging the portions from the pockets to the packaging material, and a forming unit for forming individual portion packages (i.e. pouched smokeless tobacco products) from the discharged portions and the packaging material. At the intended point of discharge of the portions of to the packaging material, said packaging material has the form of a tape, the compression means being arranged to compress the portions in a direction which differs from the discharging and the feeding directions. The compression is preferably effected in a direction perpendicular to the discharging and the feeding directions. The compression may be effected in the axial direction of the portioning wheel whereas the feeding and discharging may be effected in the radial direction of said wheel. This technique is herein referred to as the "NYPS" technique.

The individual portions are sealed and cut apart thereby forming rectangular "pillow shaped" (or any other desired form) pouched products. Generally, each final pouched product includes parallel transverse seams with seals at opposite ends and a longitudinal seam with a seal orthogonal to the transverse seams/seals. The seals should be of sufficient strength to preserve the integrity of the pouched product during use while not disturbing the user's experience.

The organoleptic properties, such as texture, aroma, taste, shape and appearance, of the pouched smokeless tobacco product are of high importance to the user.

Oral pouched smokeless tobacco products are normally sized and configured to fit comfortably and discreetly in a user's mouth between the upper or lower gum and the lip. In general, oral pouched smokeless tobacco products have a generally rectangular shape. Some typical shapes (length x width) of commercially available oral pouched smokeless tobacco products are, for instance, 35 mm x 20 mm, 34/35 mm x 14 mm, 33/34 mm x 18 mm, and 27/28 mm x 14 mm. The thickness ("height") of the pouched product is normally within the range of from 2 to 8 mm, such as from 5 to 7 mm. The total weight of commercially available oral pouched smokeless tobacco products are typically within the range from about 0.3 to about 3.5 g, such as from about 0.5 to 1.7 g, per pouched product.

The user's experience may be affected by the initial moisture content of the pouched product when put in the user's mouth and the saliva uptake (rate of uptake and amount of saliva taken up) by the pouched product.

Oral pouched smokeless tobacco products may be post-moisturized after pouch formation or not post-moisturized after pouch formation which herein is referred to as non-post-moisturized. Post-moisturized pouched products may be produced by spraying water on the pouched smokeless tobacco product before packaging the pouched products in cans. Post-moisturized pouches are sometimes referred to as "original snus". Non-post-moisturized pouched products are sometimes referred to as "white snus" and are by some users considered to have a more appealing appearance. The moisture content of the final oral pouched smokeless tobacco product comprising moist or semi-dry snuff is normally within the range of from 25 to 55% w/w based on the weight of the pouched product (i.e. the total weight of snuff and pouch material).

There are also nicotine-containing non-tobacco snuff products and nicotine-free non-tobacco snuff products available which may be offered as alternatives to smokeless tobacco products. These non-tobacco snuff products are generally used in the same manner as the corresponding tobacco snuff products.

An example of a nicotine-containing non-tobacco snuff product is provided in WO 2012/134380.

Examples of nicotine-free non-tobacco snuff products and the manufacture thereof are provided in WO 2007/126361 and WO 2008/133563.

It is generally desirable to provide oral pouched snuff products with rapid release of flavour and/or nicotine to provide an initial strong flavour experience and/or reduce nicotine craving.

The release of flavours and/or nicotine from the filling material, such as a smokeless tobacco composition, of an oral pouched snuff product, may be delayed and/or diminished by the pouch material. The initial amount of flavours and/or nicotine released from the pouched tobacco may be experienced by the consumer as unsatisfactory or even negligible. This problem is often more pronounced for non-post-moisturized oral pouched snuff products.

The material of a snuff pouch should during manufacturing of the pouch provide for heat-sealing, upon storage of the pouch exhibit none or a low degree of discoloration and upon usage by a consumer preserve integrity and strength, allow for a desired release profile of nicotine, if present, and flavours and provide a pleasant mouth-feel.

EP 2428126 A1 relates to a smokeless oral product including a permeable pouch comprising a woven material, and the pouch containing smokeless material. The material may comprise polylactide (PLA) or polyolefin (PO) material. A cut sheet of the woven PLA material is folded and the side edges are bonded by a suitable method, such as a heat melt-welding method, high frequency welding method, or ultrasonic welding method, to form the pouch. Seams formed by ultrasonic welding are disclosed to be smaller and more precise and therefore tidier and more visually appealing. They may also be more comfortable in the mouth of the user. Smaller seams have the further advantage that the required amount of woven material is reduced. However, apart from these advantages, ultrasonic welding and heat melt-welding are considered as equivalent welding techniques. The pouch may be configured to have a flexible shape that is capable of being manipulated by the user to provide an optimal arrangement for comfortable use.

US 2010/059069 A1 relates to a machine for manufacturing individual bags or sachets of cohesionless material, such as pouches of snuff for oral use. The machine comprises an intermittently rotatable dispensing disc with peripheral cavities, a station at which each cavity is filled with a given quantity of tobacco equivalent to a single portion, a push rod mechanism by which the portions of tobacco are ejected from each cavity of the disc at a transfer station, and a connecting duct through which the portion of tobacco ejected by the push rod from each cavity passes directly to a wrapping station where the pouches are formed, filled with the tobacco product and sealed. The sealing may be performed using ultrasonic welders.

WO 2014/047394 relates to a smokeless tobacco products which includes a tobacco composition and at least one fibrous structure enclosing at least a portion of the outer surface of the tobacco composition such that the fibrous structure and the tobacco composition form a cohesive structure capable of maintaining cohesion when placed in an oral cavity, wherein the fibrous structure includes one or more of (i) a warp knitted structure; (ii) a plurality of reinforcing fibers attached to the tobacco composition; (iii) a braided sleeve; and (iv) a spacer fabric.

WO 2009/004486 relates to a chewable pouch product where the chewable pouch includes a plurality of perforations. The pouch may be made of a food grade, elastomeric material, such as silicone, plastic, rubber and latex.

WO 2014/144013 relates to a melt-blown fabric for pouching smokeless tobacco or a smokeless tobacco substitute which includes melt-blown or centrifugal force spun polymer fibers. The fibers can form a non-woven fabric. The fabric can have a basis weight of less than 10 gsm and a tensile strength of at least 4mJ in at least one predetermined direction.

WO 2014/144254 relates to an elastomeric polymer pouch which is said to allow an adult tobacco consumer to reduce or increase a packing density of the elastomeric polymer pouch during use, which can impact a rate of flavor release. Use of an elastic material, such as polyurethane, is said to result in a more moldable pouched product having a comfortable mouth feel. The elastomeric polymeric material can be melt-blown, electro spun, or centrifugally force spun and sealed around a mixture including smokeless tobacco, a tobacco substitute, or a similar material.

WO 2014/152956, WO 2014/152945 and WO 2014/152938 relate to methods for producing seamless fiber-wrapped smokeless tobacco products including a plurality of melt-blown polymeric fibers surrounding the smokeless tobacco. It is said that in some cases, polymeric fibers, such as polyurethane fibers, can be more elastic and can permit an adult tobacco consumer to chew/squeeze the fiber- wrapped smokeless tobacco product and mold the product into a desired shape without the tobacco dispersing within the mouth. However, production methods wherein polymeric fibres have to be melt-blown *in situ* are rather complicated, time-consuming and expensive and require further apparatus in addition to the conventional packaging devices described herein above.

WO 2016/099960 relates to an oral pouch product having a pouch including a seamless or single seam tube of a hosiery web material, such as a web comprised of nylon and/or spandex. An elastomeric thread is placed inside the tubular enclosure. One end of the tube is sealed and connected to one end of the elastomeric thread by heat weld, tying or knotting.

Despite various attempts that have been made to provide deformable oral pouched snuff products comprising elastic pouch material, there is a need for an improved chewable and deformable oral pouched snuff product, and a method enabling high-speed manufacturing thereof, such as about 100-200 pouched products per minute, in order to be able to meet diversifying consumer requirements and provide for high production efficiency.

### SUMMARY OF THE INVENTION

According to a first aspect of the present disclosure, there is provided a oral pouched snuff product comprising a filling material and a saliva-permeable pouch enclosing the filling material, the saliva-permeable pouch comprising at least one elongated seal (may also be referred to as welded seal or welding) and the saliva-permeable pouch comprising a mesh material being elastic in at least one direction and comprising fibres of thermoplastic polyamide, wherein the at least one elongated seal has a seal strength of at least 0.10 N/mm, such as at least 0.15 N/mm, at least 0.20 N/mm, at least 0.25 N/mm or at least 0.30 N/mm, as measured in dry state using the herein disclosed test method referred to as Test Method B.

The seal strength of the at least one elongated seal, as measured in dry state using the herein disclosed test method referred to as Test Method B, may be within the range of from 0.10 N/mm to 0.50 N/mm, such as from 0.15 N/mm to 0.50 N/mm or from 0.20 N/mm to 0.50 N/mm or from 0.20 N/mm to 0.40 N/mm. In particular, the seal strength of the at least one elongated seal is measured in the machine direction, MD, of the mesh material.

In addition, the at least one elongated seal the saliva-permeable pouch may have a seal strength of at least 0.10 N/mm, such as at least 0.15 N/mm, at least 0.20 N/mm or at least 0.25 N/mm, as measured in wet state using the herein disclosed test method referred to as Test Method B.

The seal strength of the at least one elongated seal, as measured in wet state using the herein disclosed test method referred to as Test Method B, may be within the range of from 0.10 N/mm to 0.50 N/mm, such as from 0.15 N/mm to 0.40 N/mm or from 0.15 N/mm to 0.30 N/mm. In particular, the seal strength of the at least one elongated seal is measured in the machine direction, MD, of the mesh material.

In particular, the at least one elongated seal the saliva-permeable pouch may have a seal strength of at least 0.15 N/mm, such as at least 0.20 N/mm, as measured in dry state as well as in wet state using the herein disclosed test method referred to as Test Method B.

The at least one elongated seal of the saliva-permeable pouch of the product as disclosed herein may have a seal width equal to or less than 2 mm, such as within the range of from 0.1 mm to 2 mm or from 0.1 mm to 1 mm or from 0.1 mm to 0.5 mm, as further described hereinafter.

Synthetic, thermoplastic polyamides, which may be aliphatic or semi-aromatic, are also called nylon.

Examples of useful nylon fibres are thermoplastic, aliphatic polyamides such as polyamide 6 (PA 6) and polyamide 66 (PA 66).

Polyamide 6 is also called nylon 6 or polycaprolactam.

Polyamide 66 is also called nylon 66 or poly[imino(1,6-dioxohexamethylene) iminohexamethylene].

Fibres of polyamide 6 (PA 6) or polyamide 66 (PA 66) are tough and possess high tensile strength. They can also be made lustrous.

A mesh material comprising fibres of thermoplastic polyamide, such as fibres of PA 6 and PA 66, can be made thin, elastic as well as durable.

Thus, mesh material comprising fibres of thermoplastic polyamide, such as fibres of PA 6 and PA 66, may form a saliva-permeable pouch that endures being repeatedly chewed and deformed without breaking.

The mesh material of the saliva-permeable pouch of the product as disclosed herein may be a knitted material, such as a warp-knitted material.

Knitted materials are elastic materials and therefore advantageous to use for the chewable and deformable oral pouched snuff product as disclosed herein.

In addition, a mesh material, such as a warp-knitted material, has a high percentage of open area (method to determine the open area is further described below) which provides for a rapid release rate of flavour and/or nicotine and thereby an initial strong flavour experience and/or rapid satisfaction of nicotine craving.

In particular, the mesh material of the saliva-permeable pouch of the product as disclosed herein may have a basis weight of equal to or less than 25 g/m², such as within the rage of from 10 to 25 g/m², or equal to or less than 20 g/m², such as within the range of from 10 to 20 g/m², as measured using the standard test WSP 130.1(05).

The mesh material may have an elongation at break of at least 150%, in particular at least 200% or even at least 250%, as measured according to standard test method WSP 110.4(05).

The mesh material may have a tensile strength index of at least 100 Nm/g, such as within the range of from 100 to 135 Nm/g or from 100 to 125 Nm/g, as measured using the standard tests WSP 130.1(05) and WSP 110.4(05).

The mesh material of the saliva-permeable pouch may have an air permeability of above 10 000 l/m²/s, as measured using the standard test WSP 070.1.R3(12).

The mesh material may essentially consist of fibres of thermoplastic polyamide.

The mesh material may be a knitted, such as warp-knitted, material essentially consisting of fibres of thermoplastic polyamide, such as nylon fibres selected from the group consisting of polyamide 6 (PA 6) and polyamide 66 (PA 66). Thus, the mesh material may be devoid of any other fibres or polymers than the fibres of thermoplastic polyamide.

The mesh material may be a knitted, such as warp-knitted, material consisting of fibres of polyamide 6 (PA 6).

The mesh material may be a knitted, such as warp-knitted, material consisting of fibres of polyamide 6 (PA 6) having a basis weight of equal to or less than 25 g/m², such as within the rage of from 10 to 25 g/m², or equal to or less than 20 g/m², such as within the range of from 10 to 20 g/m², as measured using the standard test WSP 130.1(05).

The saliva-permeable pouch may consist of the elastic mesh material comprising or consisting of fibres of thermoplastic polyamide, such as fibres of polyamide 6 (PA 6).

Despite the above advantages of mesh materials of polyamide fibres, pouch materials comprising polyamides have up until now not been used for snuff products due to the difficulties to use such materials in conventional large-scale, high speed manufacturing of pouched snuff products using heat-melt welding. Another problem is that heat-melt welding of materials comprising polyamide fibres provides inflexible seals which may rub the gum of the user. In addition, sufficient seal strength in wet state is particularly important if the saliva-permeable pouch of the snuff product is aimed to endure being repeatedly chewed and deformed without breaking.

It has been now found that these problems are avoided when the seals of the oral pouched snuff products are created by ultrasonic welding instead of heat-melt welding.

In welding, materials are joined by fusing. The materials to be joined are melted in order to allow formation of a solid-state weld.

Melting occurs when the internal energy of a solid increases, typically by the application of heat or pressure. At the melting point the change in Gibbs free energy ΔG of the material is zero, but the enthalpy (H) and the entropy (S) of the material are increasing (Δ*H*, Δ*S* > *0*). Melting occurs when the Gibbs free energy of the liquid becomes lower than the solid for that material.

Ultrasonic welding causes local melting of the materials to be joined due to absorption of vibration energy. The vibrations are introduced across the joint to be welded. Generally, melting of the material to be sealed is caused by applying high frequency ultrasonic acoustic vibrations. Ultrasounds have frequencies higher than the upper audible limit of a human, which is about 20 kHz for a young adult.

Even though both heat melt-welding and ultrasonic welding cause melting of the pouch material or a binder present in the pouch material, it has surprisingly been found that an elastic mesh material comprising or essentially consisting of fibres of thermoplastic polyamide can be ultrasonically welded in order to provide seals having sufficient seal strength even in wet state, thereby allowing the formation a chewable and deformable oral pouched snuff product where the saliva-permeable pouch comprises a high-strength, elastic mesh material. By ultrasonically welding a mesh material comprising fibres of thermoplastic polyamide, an elongated seal having a seal strength of at least 0.10 N/mm, such as within the range of from 0.15 N/mm to 0.50 N/mm, as measured in dry state using the herein disclosed Test Method B, may be formed.

Moreover, ultrasonic welding enables the formation of seals having a reduced seal width and being more precise than seals formed by heat melt-welding. Such seals are therefore tidier, more visually appealing and more discrete. They may also be more comfortable in the mouth of the user. Narrower seals have the further advantage that the amount of pouch material required is reduced.

The seal strength of oral pouched snuff product as disclosed herein may be better preserved upon storage of the product in comparison to a reference oral pouched snuff product comprising a pouch of heat melt welded viscose nonwoven.

In particular, simultaneous ultrasonic welding and cutting, as described hereinafter, may provide a cut in the welded area and may provide seals with a seal width equal to or less than 2 mm, such as within the range of from 0.1 mm to 2 mm or from 0.1 mm to 1 mm or from 0.1 mm to 0.5 mm. Thus, the at least one elongated seal of the saliva-permeable pouch of the oral pouched snuff product as disclosed herein may be an ultrasonically provided weld, in particular ultrasonically provided weld having a seal width of about 1 mm. The ultrasonically provided weld may be formed by simultaneous ultrasonic welding and cutting of the packaging material such that a cut is provided in a welded area, thereby at least one outermost end portion of the pouch may be sealed by the at least one elongated seal. This means that the pouch will lack protruding unsealed outermost end portions. In other words, the seal will be coterminous with end edges of the packaging material forming the pouch.

The saliva-permeable pouch of the oral pouched snuff as disclosed herein may consist of the mesh material which is elastic in at least one direction and comprises or consists of fibres of thermoplastic polyamide, such as polyamide 6.

According to a second aspect of the present disclosure, there is provided a method for producing an oral pouched snuff product as disclosed herein, the oral pouched snuff product comprising a filling material and a saliva-permeable pouch enclosing the filling material, the saliva-permeable pouch comprising at least one elongated seal and the saliva-permeable pouch comprising a mesh material being elastic in at least one direction and comprising fibres of thermoplastic polyamide, the method comprising:
supplying and advancing a tubular web of the mesh material enveloping a continuous feed of the filling material in a direction of travel (L);
forming transverse seals in said tubular web across said continuous feed of filling material by means of ultrasonic welding, said transverse seals extending in a transverse direction (T) being perpendicular to said direction of travel (L), and
cutting the tubular web along the transverse direction, thereby forming a plurality of oral pouched snuff products.

The ultrasonic welding and cutting may be performed simultaneously thereby providing a cut in a welded area.

### BRIEF DESCRIPTION OF THE DRAWINGS

- Fig. 1 a-b: illustrate a portion packet of an oral pouched snuff product,
- Fig. 2a-b: illustrate a portion packet of another oral pouched snuff product,
- Fig. 3: illustrates a first arrangement for portion-packing of an oral pouched snuff product,
- Fig. 4: illustrates a second arrangement for portion-packing of an oral pouched snuff product according to a second embodiment,
- Fig. 5: illustrates a third arrangement for portion-packing of an oral pouched snuff product,
- Fig. 6: illustrates an alternative welding unit for transverse seals, and
- Fig. 7: illustrates a sample used in a method for determining heat seal strength.

### DETAILED DESCRIPTION

By "tobacco" is meant any part, e.g., leaves, stems, and stalks, of any member of the genus Nicotiana. The tobacco may be whole, shredded, threshed, cut, ground, cured, aged, fermented, or treated otherwise, e.g., granulated or encapsulated.

The term "tobacco material" is used herein for tobacco leaves or parts of leaves, such as lamina and stem. The leaves and parts of leaves may be finely divided (disintegrated), such as ground, cut, shredded or threshed, and the parts of leaves may be blended in defined proportions in the tobacco material.

"Oral" and "oral use" is in all contexts used herein as a description for use in the oral cavity of a human, such as buccal placement.

As used herein "pouched smokeless tobacco product for oral use" or "oral pouched smokeless tobacco product" refers to a portion of smokeless tobacco packed in a saliva-permeable pouch material intended for oral use.

As used herein, the term "moisture content" refers to the total amount of oven volatile ingredients, such as water and other oven volatiles (e.g. propylene glycol) in the preparation, composition or product referred to. The moisture content is given herein as percent by weight (wt%) of the total weight of the preparation, composition or product referred to.

The moisture content as referred to herein may be determined by using a method based on literature references Federal Register/ vol.74, no. 4/712-719/Wednesday, January 7, 2009/Notices "Total moisture determination" and AOAC (Association of Official Analytical Chemics), Official Methods of Analysis 966.02: "Moisture in Tobacco" (1990), Fifth Edition, K. Helrich (ed). In this method, the moisture content is determined gravimetrically by taking 2.5±0.25 g sample and weighing the sample before evaporation of moisture and after completion of dehydration. Mettler Toledo's Moisture Analyzer HB43, a balance with halogen heating technology, is used (instead of an oven and a balance as in the mentioned literature references) in the experiments described herein. The sample is heated to 105°C (instead of 99.5±0.5°C as in the mentioned literature references). The measurement is stopped when the weight change is less than 1 mg during a 90 seconds time frame. The moisture content as weight percent of the sample is then calculated automatically by the Moisture Analyzer HB43.

The term "additional ingredient" as used herein denotes substances other than tobacco material, salt (e.g. sodium chloride, potassium chloride, magnesium chloride, calcium chloride and any combinations thereof), pH adjuster (e.g. sodium hydroxide, potassium hydroxide, potassium carbonate, sodium carbonate or sodium bicarbonate) and water.

"Flavour" or "flavouring agent" is used herein for a substance used to influence the aroma and/or taste of the smokeless tobacco product, including, but not limited to, essential oils, single flavour compounds, compounded flavourings, and extracts.

As used herein "finely divided" means an average particle size of less than 2 mm. The particles of the finely divided tobacco material may be sized to pass through a screen of about 10 (US) mesh, i.e. sieve size 2.0 mm, or 18 (US) mesh, i.e. sieve size 1.0 mm.

As used herein "% w/w" or "wt %" or "weight %" refers to weight percent of the ingredient referred to of the total weight of the preparation, composition or product referred to.

As used herein, reference to "dry weight percent" refers to weight percent of the ingredient referred to on the basis of the total weight of dry ingredients, i.e. all ingredients of the preparation, composition or product referred to excluding moisture content.

As used herein, the term "seam" refers to those parts of the pouch material which are brought into contact with one another in order to form the pouch. The seam further comprises a seal. The seal may be narrower in width than the seam. Alternatively, the entire width of the seam contains the seal (i.e. the seam and seal have the same width).

As used herein, "mesh material" refers to any material made of interlacing fibres, in particular materials made of fibres interlaced in a regular pattern, such as woven or knitted materials.

As used herein, "elastic material" refers to a material which elongates in at least one direction when stress is applied in that direction and thereafter returns to its original size and shape when the stress is removed.

The oral pouched snuff product as disclosed herein comprises a filling material and a saliva-permeable pouch enclosing the filling material. The saliva-permeable pouch comprises a mesh material, such as a warp-knitted material, being elastic in at least one direction and comprising or consisting of fibres of thermoplastic polyamide, such as polyamide 6. The saliva-permeable pouch comprises at least one elongated seal and the at least one elongated seal has a seal strength of at least 0.10 N/mm as measured in dry state using the herein disclosed method, Test Method B, for measuring seal strength. In addition, the at least one elongated seal may have a seal strength of at least 0.10 N/mm as measured in wet state using the herein disclosed method, Test Method B, for measuring seal strength.

The mesh material may be elastic as a result of its production method, such as knitting.

Alternatively or additionally, the mesh material may comprise elastic fibres, such as elastic fibres of thermoplastic polyamide, for instance elastic fibres of polyamide 6. In such case, the mesh material may be woven or knitted.

The at least one elongated seal of the the oral pouched snuff product as disclosed herein may have a seal width being equal to or less than 2 mm, such as within the range of from 0.1 mm to 2 mm or from 0.1 mm to 1 mm or from 0.1 mm to 0.5 mm, and said at least one elongated seal may seal an outermost end portion of said saliva-permeable pouch. The seal length extends along the longitudinal extension of the seal and the seal width extends along the transverse extension of the seal.

The at least one elongated seal may be an ultrasonically provided weld, such as an ultrasonically provided weld formed by simultaneous ultrasonic welding and cutting of the packaging material such that a cut is provided in a welded area, thereby at least one outermost end portion of the pouch being sealed by the at least one elongated seal.

The oral pouched snuff product as disclosed herein has a longitudinal direction and a transverse direction perpendicular to said longitudinal direction. The saliva-permeable pouch of the product may comprise a first elongated seal and a second elongated seal, each of the first and second elongated seals having a seal length extending along said transverse direction of the product and a seal width extending along the longitudinal direction of the product, the seal width of each of the first elongated seal and the second elongated seal being equal to or less than 2 mm, such as within the range of from 0.1 mm to 2 mm or from 0.1 mm to 1 mm or from 0.1 mm to 0.5 mm, the first elongated seal sealing a first outermost end portion of the pouch, and the second elongated seal sealing a second outermost end portion of said saliva-permeable pouch.

The total weight of the oral pouched product (including filling material and pouch) may be within the range of from 0.5 g to 3.0 g, such as within the range of from 1.0 g to 2.0 g.

The oral pouched snuff product may have a deformable substantially spherical shape with a diameter within the range of, for instance, from 10 to 15 mm.

The oral pouched snuff product may have a deformable substantially pillow-like (rectangular) shape with a length x width x thickness of, for instance, about 15 x 15 x 10 mm.

The oral pouched snuff product may have a deformable substantially cubical (square) shape with a length x width x thickness of, for instance, about 15 x 15 x 15 mm.

As disclosed herein, the oral pouched product may be an oral pouched smokeless tobacco product and the filling material may then comprise tobacco material, in particular tobacco material in the form of moist snuff or snus.

However, the oral pouched product may alternatively or additionally contain any other botanical filling material, such as any non-tobacco plant fibres.

The oral pouched product as disclosed herein may be an oral pouched non-tobacco snuff product.

The oral pouched product as disclosed herein may be an oral pouched non-tobacco nicotine-free snuff product comprising a botanical filling material, such as one or more non-tobacco plant fibers. Examples of non-tobacco plant fibers are maize fibers, oat fibers, tomato fibers, barley fibers, rye fibers, sugar beet fibers, buck wheat fibers, potato fibers, apple fibers, cocoa fibers, bamboo fibers and citrus fibers.

The oral pouched product as disclosed herein may be an oral pouched non-tobacco nicotine-containing snuff product. The filling material may then be a particulate material comprising nicotine or a salt thereof and one or more fillers, such as polysaccharides (e.g. maltitol and mannitol) and/or microcrystalline cellulose.

An oral pouched smokeless tobacco product generally includes a tobacco composition comprising divided (e.g. ground or cut) tobacco material, water, salt (e.g. sodium chloride, potassium chloride, magnesium chloride, calcium chloride or any combinations thereof), pH adjuster (e.g. sodium carbonate, sodium hydroxide, potassium hydroxide, potassium carbonate, sodium carbonate , sodium bicarbonate or magnesium carbonate) and optionally one or more additional ingredients, such as flavouring agents, cooling agents, heating agents, sweetening agents, colorants, humectants (e.g. glycerol or propylene glycol), antioxidants, preservatives (e.g. as potassium sorbate), binders, fillers, non-tobacco plant fibers and/or disintegration aids. The smokeless tobacco composition may be a moist snuff composition, such as a snus composition.

Typically, the amount of tobacco material in the smokeless tobacco composition is within the range of from about 50 to about 80% w/w based on dry weight of the smokeless tobacco composition. The tobacco material is typically finely divided, such as cut (shredded) or ground tobacco material, in granulated form or in powder form, i.e. tobacco flour, for instance having an average particle size of about 1 mm to about 2 mm. The tobacco material may be cured (aged) tobacco material.

Salt, such as sodium chloride, potassium chloride, magnesium chloride, calcium chloride and any combinations thereof, is added mainly for its effect on taste but it also has a preservative action which contributes to improved shelf life of the product. Salt, such as sodium chloride lowers the water activity of the products, thus preventing microorganisms from growing. The natural occurrence of sodium chloride in tobacco material is normally below 2% w/w, typically below 1% w/w, based on dry weight of the tobacco material. Normally, the amount of added salt in the smokeless tobacco composition is within the range of from about 0.5 to about 10% w/w based on dry weight of the tobacco composition.

pH adjusters, such as sodium carbonate, are added to bring the pH value to the slightly alkaline side, such as about pH 7.5 to 8.5. Sodium carbonate may also be used to give the products their characteristic aroma profile. Typically, the amount of pH adjuster in the smokeless tobacco composition is less than about 7% w/w, such as within the range of from 3 to 5% w/w, based on dry weight of the tobacco composition.

Humectants, such as propylene glycol or glycerol, may also be added to protect the product from drying out and may also have a preservative effect since the water activity of the product will be lowered, thereby preventing microorganisms from growing. Normally, the amount of humectant in the smokeless tobacco composition is within the range of from about 5 to about 15% w/w based on dry weight of the tobacco composition.

Flavours used are generally natural or nature identical compounds that comply with food regulations. Flavours are usually dissolved in ethanol when added.

The pouch material may comprise additional ingredients, such as flavouring agents and/or colorants.

In addition, the smokeless tobacco composition may optionally comprise other botanical filling material, such as any non-tobacco plant fiber. Examples of non-tobacco plant fibers are maize fibers, oat fibers, tomato fibers, barley fibers, rye fibers, sugar beet fibers, buck wheat fibers, potato fibers, apple fibers, cocoa fibers, bamboo fibers and citrus fibers. The amount of non-tobacco plant fiber material, such as bamboo fibers, in the smokeless tobacco composition may be within the range of from about 1 to about 60% w/w, such as from about 2 to about 20% w/w, based on dry weight of the smokeless tobacco composition.

The pouched product as disclosed herein are intended for use in the oral cavity, such as buccal placement (e.g. by placing the pouched product between the upper or lower gum and the lip or cheek), and may therefore be referred to as oral pouched product or portion-packed (pouched) product for oral use. The oral pouched product is sized and configured to fit comfortably and discreetly in a user's mouth between the upper or lower gum and the lip or cheek.

The oral pouched product as disclosed herein may be a post-moisturized or non-post-moisturized oral pouched smokeless tobacco product. The moisture content of the oral pouched smokeless tobacco product as disclosed herein may be within the range of from 10 to 60% w/w, such as within the range of from 15 to 60% w/w or from 20 to 60% w/w or from 30 to 60% w/w or from 40 to 60% w/w or from 30 to 55% w/w or from 40 to 55% w/w or from 45 to 55% w/w or from 50 to 55% w/w, based on the total weight of the product.

The oral pouched product as disclosed herein may be a non-post-moisturized oral pouched smokeless tobacco product having moisture content within the range of from 30 to 60%, such as within the range of from 30 to 55% w/w or from 40 to 55% w/w or from 45 to 55% w/w or from 50 to 55% w/w or from 50 to 53% w/w, based on the total weight of the product.

The oral pouched snuff product as disclosed herein may be a post-moisturized oral pouched smokeless tobacco product having moisture content within the range of from 40 to 60% w/w, such as within the range of from 45 to 55% w/w or from 50 to 53% w/w, based on the total weight of the product.

In particular, the filling material of the oral pouched smokeless tobacco product may be a smokeless tobacco composition comprising cut tobacco.

When making snus according to GothiaTek® standard, which implies hygienic handling of all ingredients and pasteurization of the loaded materials thus assuring a final tobacco composition with negligible levels of bacteria, the typical main ingredients, besides tobacco, are water, sodium chloride (NaCl) and sodium carbonate (Na₂CO₃). Flavours and humectants (e.g. propylene glycol or glycerol) are also common ingredients and additional food approved additives might be used.

There are normally two major steps in the manufacturing process of converting tobacco to a snus composition; a) grinding (or cutting) and sieving and b) snus-processing.

### a) Grinding and sieving

Generally, tobacco flour is produced by batch grinding. Compressed tobacco is emptied from its cases and torn to large fragments which are cut to pieces. The cut tobacco pieces are dried and transported to a mill. The tobacco is ground and ground tobacco particles are sieved and separated into fractions. Too large particles may be brought back to the mill for re-grinding. The cutting, grinding and sieving is done in equipment where foreign objects such as fragments of metallic material and stones are separated and removed from the tobacco. A number of approved fractions are weighed in separate fractions scales. The weighed tobacco flour fractions are collected to pre-set quantities in a container and blended by circulation. The blended tobacco flour is stored in a container. Different types of tobacco flours are kept in separate containers.

### b) Snus-processing

The snus mixture (herein referred to as smokeless tobacco composition) is produced by batch processing and should be carried out in a closed system to minimize the risk of contamination from bacteria or foreign substances. Since automatic feeding of tobacco and the other ingredients is preferred, the whole process may be computer controlled and can be run day and night, all week around.

The process normally starts with loading of tobacco material in powder form (tobacco flour), water, sodium chloride (NaCl) and possibly additional additives, into a cylindrical blender. Loading is done while stirring. The loaded materials are mixed to a homogeneous blend, which is heated by injection of steam. The blend is then kept heated for several hours with support of steam to ensure reduction of the natural bacterial flora in the tobacco and to bring texture, taste and color to the snus blend. Time, temperature and frequency of stirring during heat treatment, parameters specified for different snus blend qualities, are preferably controlled by a process computer program. After heat treatment, the blend is normally chilled by flow of cold water through the blender jacket during stirring. Water, flavours, pH adjuster, such as sodium carbonate, and possibly additional additives may then be added to the chilled blend. The blend is finally mixed to a homogeneous snus composition.

The oral pouched (i.e. portion-packed) products, such as oral pouched smokeless tobacco products, as disclosed herein, may be positioned randomly in a container. Alternatively or additionally, each oral pouched (i.e. portion-packed) product may be placed in a sachet.

The oral pouched snuff product as disclosed herein may be produced by a method comprising:
a) supplying and advancing a tubular web of the mesh material enveloping a continuous feed of filling material in a direction of travel (L);
b) forming transverse seals in the tubular web across the continuous feed of filling material by means of ultrasonic welding, the transverse seals extending in a transverse direction (T) being perpendicular to the direction of travel (L),
c) cutting the tubular web along the transverse direction, thereby forming a plurality of oral pouched snuff products.

As disclosed herein above, the mesh material is a mesh material being elastic in at least one direction and comprising fibres of thermoplastic polyamide. The mesh material may be a knitted material, such as a warp-knitted material. The mesh material may consist of fibres of thermoplastic polyamide, such as polyamide 6. Thus, the mesh material used in the method may be a knitted material, such as a warp-knitted material, consisting of fibres of thermoplastic polyamide, such as polyamide 6.

The ultrasonic welding of step b) and the cutting of step c) may be performed simultaneously, thereby providing a cut in a welded area of the transverse seal.

Step b) in the method disclosed above may comprise:
b1) applying a pressure to said tubular web in a zone corresponding to an intended location of one of the transverse seals, thereby moving at least a portion of the filling material away from said zone, and thereafter
b2) ultrasonically welding while continuing to apply the pressure in said zone.

Step a) in the method disclosed above may comprise:
a1) supplying and advancing at least one web of the mesh material in the direction of travel (L),
a2) supplying the continuous feed of filling material to the at least one advancing web of said mesh material,
a3) arranging the at least one advancing web of mesh material to envelop the continuous feed of filling material, thereby forming the tubular web enveloping the continuous feed of filling material.

Step a3) in the method disclosed above may comprise longitudinally folding the at least one web of the mesh material to envelop the continuous feed of filling material, or supplying an additional web of mesh material to envelop the continuous feed of filling material.

Step a) in the method disclosed above may further comprise:
a4) forming at least one longitudinal seal in the tubular web of mesh material.

Step a) in the method disclosed above may further comprise:
a5) longitudinally cutting the tubular web of mesh material, in particular performing the longitudinal cutting in or at said longitudinal seal. The longitudinal cutting in or at said longitudinal seal may be performed while forming said longitudinal seal such as by simultaneous ultrasonic welding and cutting.

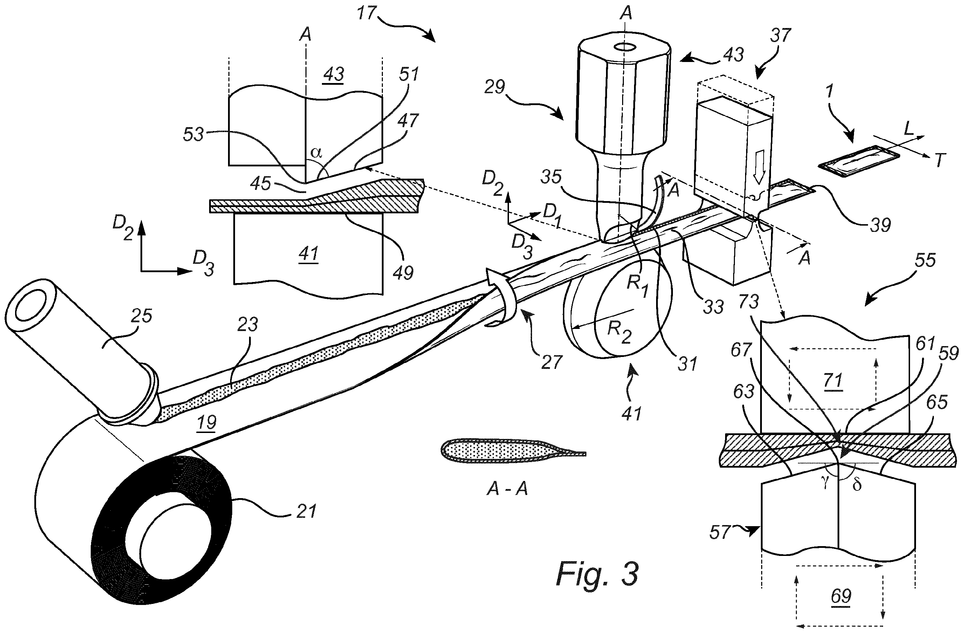

Figures 3-6 illustrate arrangement for sealing the mesh material (referred to as packaging material in the disclosure hereinafter) enclosing a snuff composition to provide portion-packed oral pouched snuff products using the method as disclosed herein.

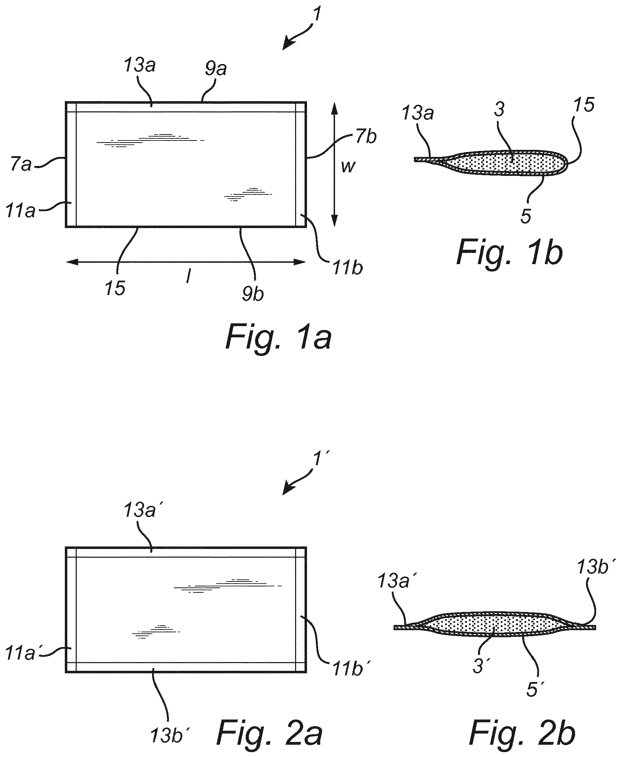

Figures 1 a and 1 b schematically illustrate a portion packet 1 of an oral pouched snuff product, which has been made according to the method and with an arrangement as described herein. The portion packet 1 comprises a portion 3 of a filling material enclosed in a packaging material 5. The filling material comprises a smokeless tobacco or tobacco-free material, which may be nicotine-containing or nicotine free. The filling material may also be referred to as filling composition or snuff composition.

The portion packet 1 has a pillow-like shape, which typically is substantially rectangular, when seen from its largest side, e.g. lying down on a table, as is illustrated in Figure 1a. The portion packet 1 has a length I and a width w. The shape comprises two parallel short edges 7a, 7b extending in the width direction and two parallel long edges 9a, 9b, which extend in the length direction and thus are perpendicular to the short edges 7a, 7b. A respective transverse seal 11 a, 11 b is arranged at each of the short edges 7a, 7b. A longitudinal seal 13a is located along one of the long edges 9a, while there is a fold 15 along the other of the long edges 9b. The term fold as used herein refers to that the packaging material is curved such that it changes direction by substantially 180°. There is typically no sharp folding line in the fold 15, but rather a curvature wherein the packaging material follows the shape of the portion 3 of filling material, as is seen in Figure 1 b. The portion 3 of the filling material is completely enclosed by the three seals 11 a, 11 b, 13a and the fold 15.

Figures 2a and 2b schematically illustrate another portion packet 1' of an oral pouched snuff product, which has been made according to the method and with an arrangement as described herein. The portion packet 1' comprises a portion 3' of a filling material enclosed in packaging material 5'. The portion packet 1' of Figures 2a and 2b differs from that of Figures 1 a and 1 b in that there is a longitudinal seal 13a', 13b' at each of the long edges 9a', 9b'. The portion 3' of the filling material is thus completely enclosed by the four seals 11 a', 11 b', 13a', 13b' sealing the packaging material.

Figure 3 schematically illustrates a method and an arrangement 17 for portion-packing of an oral pouched snuff product 1 according to a first embodiment. A web 19 of the packaging material is supplied, e.g. from a roll being part of a first feeding unit 21, and is advanced through the arrangement 17 in a direction of travel, which coincides with a longitudinal direction L of the web 19. The web 19 has a planar extension when supplied from the first feeding unit 21. A continuous feed 23 of filling material, e.g. snuff, is supplied to the advancing web 19 of packaging material from a second feeding unit 25, such that the continuous feed 23 of filling material is positioned on top of the planar web 19.

The arrangement 17 further comprises a belt with vacuum holes, not illustrated. The vacuum holes are located below the intended position of the continuous feed 23 of filling material. The vacuum is used to keep the filling material in place and thus also to keep the web 19 of packaging material, on which the filling material is placed, in the desired position. The belt is used to advance the web 19.

Further downstream, the web 19 is longitudinally folded along the direction of travel L in a folding unit 27, such that a portion of the web 19, e.g. half of its width, is positioned on top of the continuous feed 23 of filling material, thereby forming two plies of packaging material, which are to be attached to each other by welding. Thereby a tubular web 33 is formed, which envelops the continuous feed 23 of filling material in the direction of travel. The first feeding unit 21, the second feeding unit 25 and the folding unit 27 together form a supply unit for forming the tubular web 33.

Subsequently, the web 19 is longitudinally sealed, i.e. sealed in the longitudinal direction, by means of a longitudinal welding unit 29 forming a longitudinal seal 31. Thereby the tubular web 33 enveloping the continuous feed 23 of filling material is provided with the longitudinal seal 31 extending in the direction of travel of the web 19. The continuous feed 23 of filling material has the fold of the web 19 at one of its lateral sides and the longitudinal seal 31 at the opposite lateral side, cf. the fold 15 and the longitudinal seal 13a in Figures 1a and 1b. The longitudinal welding unit 29 is further described below.

The tubular web 33 is cut in the longitudinal direction L in order to remove packaging material located outside of the longitudinal seal 31, i.e. on the lateral side of the longitudinal seal free from filling material. This undesired packaging material may be cut away, e.g. as strips 35, and disposed of. Hence, it is enough to weld on only one side of the longitudinal cut in the arrangement according 17 to the first embodiment. In the illustrated embodiment, cutting and welding are both performed by the longitudinal welding unit 29 and hence performed simultaneously, but it would also be feasible to have a separate longitudinal cutting unit downstream of the longitudinal welding unit 29.

As a next step, the tubular web 33 is transversally sealed by an ultrasonic welding unit 37, which forms a transverse seal 39 extending in a transverse direction T being perpendicular to the longitudinal direction L and thus to the direction of travel. During or after transverse welding, the tubular web 33 is cut in the transverse direction T. In the illustrated embodiment, cutting and welding are both performed by the ultrasonic welding unit 37. This will result in a portion packet 1 with the three seals 11 a, 11 b, 13a and the fold 15 described above in conjunction with Figures 1a and 1b. The ultrasonic welding unit 37 for transverse sealing is also further described below.

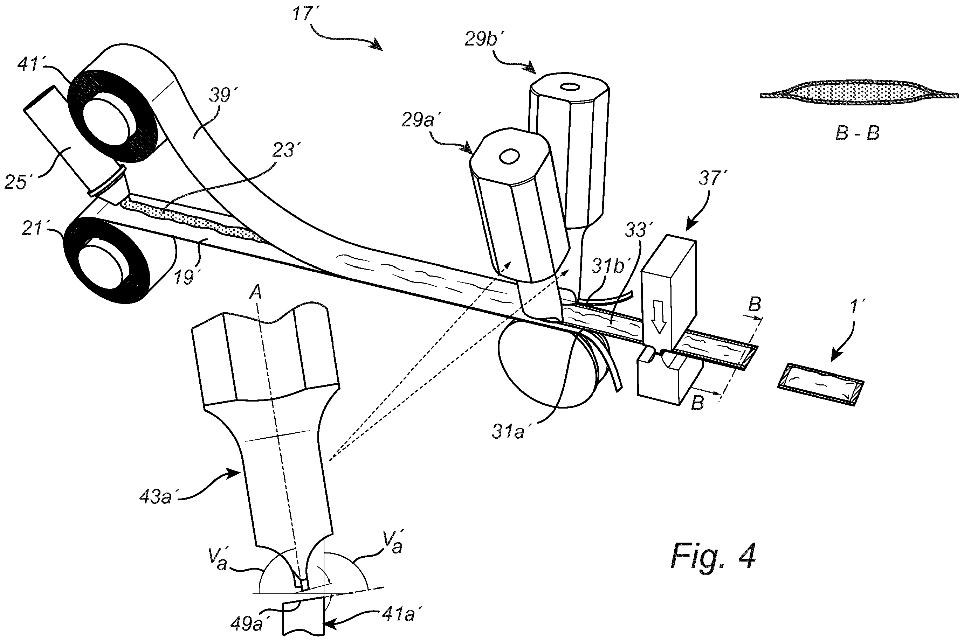

Figure 4 schematically illustrates a method and an arrangement 17' for portion-packing of an oral pouched snuff product according to a second embodiment. A web 19' of the packaging material is supplied, e.g. from a roll being part of a first feeding unit 21', and advanced through the arrangement 17' in the direction of travel. A continuous feed 23' of filling material is supplied to the advancing web 19' of packaging material from a second feeding unit 25' and positioned on top of the web 19'. Thereafter, an additional web 39' of the same or another packaging material is supplied from a third feeding unit 41' and positioned on top of the continuous feed 23' of filling material.

The web 19' and the additional web 39' are thereafter longitudinally sealed to each other at either lateral side of the continuous feed 23' of filling material by means of longitudinal welding units 29a', 29b' forming longitudinal seals 31 a', 31 b'. Hence a tubular web 33' enveloping the continuous feed 23' of filling material is provided with the longitudinal seals 31 a', 31 b', extending in the direction of travel. The continuous feed 23' of filling material has a first longitudinal seal 31 a' at one lateral side and a second longitudinal seal 31 b' at the opposite lateral side, cf. the longitudinal seals 13a', 13b' in Figures 2a and 2b. The longitudinal welding units 29a', 29b' are further described below.

Thereafter, the tubular web 33' is transversally sealed and cut by an ultrasonic welding unit 37' in a corresponding way as described for Figure 3. This will result in a portion packet 1', having four seals 11 a', 11 b', 13a', 13b', as is described above in conjunction with Figures 2a and 2b.

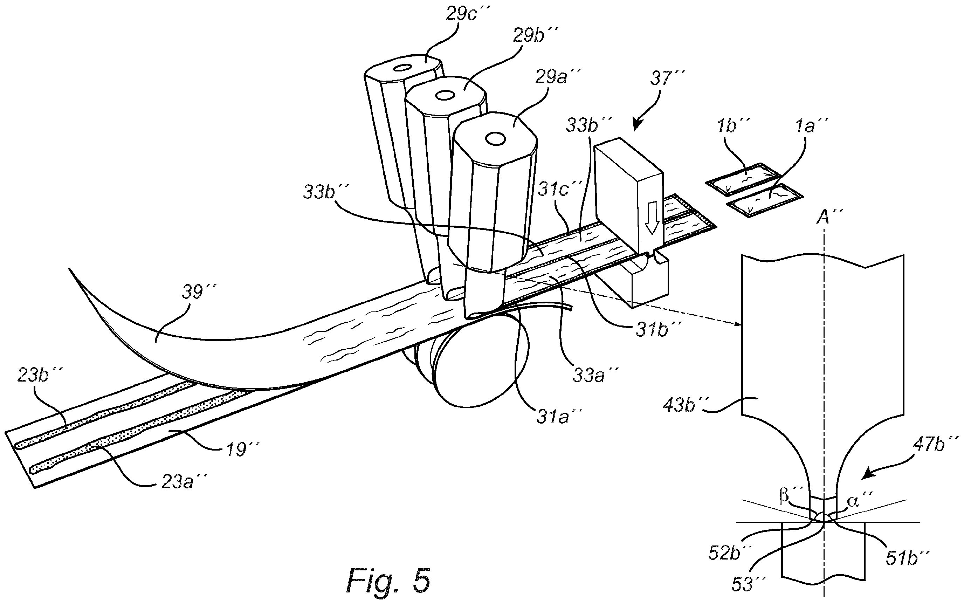

Figure 5 schematically illustrates a method and an arrangement 17" for portion-packing of an oral pouched snuff product according to a third embodiment. It has most features in common with the second embodiment of Figure 4, but the Figure 5 embodiment differs in that the web 19" of packaging material is wide enough to make a plurality of pouched snuff products parallel to each other. The illustrated example shows two pouched snuff product being made in parallel, but it would also be feasible to make three, four, five, six or more snuff products in parallel.

A plurality of continuous feeds of filling material 23a", 23b", here two, are supplied parallel to each other to the web 19" of packaging material. Correspondingly as for Figure 4, an additional web 39" is positioned on top of the continuous feeds 23a", 23b" of filling material. Thereafter the web 19" and the additional web 39" are welded to each other at both lateral sides of the respective continuous feeds 23a", 23b" of filling material by means of a first 29a", a second 29b" and a third 29c" longitudinal welding unit, such that longitudinal seals 31 a", 31 b", 31 c" are formed along the continuous feeds 23a", 23b" of filling material. The first and third welding units 29a" and 29c" are similar to those of the second embodiment and thus arranged to form the longitudinal seals 31a" and 31c" and to cut the undesired packaging material away as strips, while the second welding unit 29b" is arranged to form the longitudinal seal 31 b" in between the continuous feeds 23a", 23b" of filling material. After longitudinal sealing, the continuous feeds 23a", 23b" of filling material are each longitudinally enveloped by the three longitudinal seals 31 a", 31 b", 31 c", such that two tubular webs 33a", 33b" are formed.

Subsequently, the tubular webs 33a", 33b" are transversally sealed and cut by an ultrasonic welding unit 37" in a corresponding way as for Figure 3. There may be one ultrasonic welding unit for each tubular web 33a", 33b" or there may be a common ultrasonic welding unit 37" for both webs as is illustrated. This will result in portion packet 1 a", 1 b" having four seals 11 a', 11 b', 13a', 13b', as is described above in conjunction with Figures 2a and 2b.

The longitudinal welding units 29, 29a', 29b', 29a", 29b", 29c" illustrated in Figures 3-5 comprise a first and a second welding component located at opposite sides of the tubular web 33, 33', 33" to form a gap, through which the tubular web 33, 33', 33" is arranged to pass. The welding units may also be called sealing devices.

In the illustrated embodiments, the longitudinal sealing is made by means of ultrasonic welding. Hence, the first welding component is a sonotrode and the second welding component is an anvil. Further, the longitudinal welding units 29, 29a', 29b', 29a", 29b", 29c" combine welding and cutting. The cutting and welding is thereby made simultaneously in time, in the same operation step and geometrically next to each other.

The longitudinal welding unit 29 of the first embodiment of Figure 3 is suitable for making the longitudinal seal 31 of Figure 3, the longitudinal seals 31 a' and 31 b' of Figure 4 and the outer longitudinal seals 31 a", 31 c" of Figure 5, wherein packaging material located outside of the longitudinal seal, i.e. on the lateral side of the seal where there is no filling material, is to be cut away, e.g. as strips 35, and disposed of. Hence, it is enough to weld on only one side of the cut.

The longitudinal welding unit 29 comprises an anvil 41 and a sonotrode 43, see Figure 3. The sonotrode 43 is adapted for transmitting ultra-sonic energy and is arranged opposite to the anvil 41 to allow passage of the tubular web 33 in a gap 45 formed between the sonotrode 43 and the anvil 41. The anvil 41 and the sonotrode 43 are configured for simultaneous welding and cutting of the packaging material. The welding operation is utilized to provide the tubular web 33 with one or more longitudinal seal 31. The cutting operation is utilized to cut the packaging material, e.g. to separate superfluous packaging material from the longitudinal seal as strips 35. The tubular web 33 is adapted to be advanced in the direction of travel L through the gap 45, while the anvil 41 and the sonotrode 43 in the illustrated embodiment are stationary.

The sonotrode 43 comprises a first operation surface 47 and the anvil 41 comprises a second operation surface 49, which is located opposite to the first operation surface 47. The first operation surface 47 forms an end of the sonotrode 43 facing a planar extension of the tubular web 33, here from above. The second operation surface 49 forms an end of the anvil 41 facing the planar extension of the tubular web 33 from the other side of the tubular web 33, here from below.

The first operation surface 47 of the sonotrode 43 comprises a welding surface 51 and a cutting edge 53 delimiting an edge of the welding surface 51. The cutting edge 53 is located at a portion of the first operation surface 47 being adjacent to the narrowest portion of the gap 45. The cutting edge 53 is adapted to cut through the packaging material. The second operation surface 49 is flat and substantially parallel to the planar extension of the tubular web 33. The welding unit 29 may also be configured the other way around, such that the first operation surface with the cutting edge is comprised in the anvil and the second operation surface in the sonotrode, or there may be a cutting edge in both the anvil and the sonotrode.

The extension direction of the cutting edge 53 defines a first direction D₁ of the sonotrode 43. Since the welding unit 29 is adapted to provide a longitudinal seal 33, the first direction D₁ substantially coincides with the direction of travel, i.e. the longitudinal direction L of the web 19. A main direction A of the sonotrode 43 defines a second direction D₂, which is perpendicular to the first direction D₁. A third direction D₃ is perpendicular to both the first direction D₁ and to the second direction D₂ and extends in the transverse direction T of the web 19.

The welding surface 51 assumes an angle α being between 60° and 90° in relation to the main direction A of the sonotrode 43, being parallel to the second direction D₂, preferably the angle α being in the range from 65° to 85°, more preferably from 70° to 80°, most preferably from 73° to 78°. In the illustrated embodiment, the angle α is substantially 75°. The welding surface 51 extends all the way to the cutting edge 53, such that there is no interspace between the weld and the cut, i.e. there are no non-welded portions adjacent to the cut. As mentioned above, the second operation surface 49 is non-angled. It thus assumes an angle of 90° in relation to the second direction D₂.

The welding surface 51 comprises a welding zone delimited at one side by the cutting edge 53, in which zone the anvil 41 and the sonotrode 43 are close enough to be able to at least partly melt the two plies of the packaging material and thereby join them by welding. The width of the welding zone in the third direction D₃ is a portion of the width of the welding surface 51 and depends on characteristics of the welding unit, the packaging material and their interaction. Examples of device characteristics are angles of the operation surfaces 47, 49 relative to each other, distance between the operation surfaces 47, 49, material properties of the anvil 41 and the sonotrode 43, frequency and energy of the ultra sound of the sonotrode 43. Examples of packaging material characteristics are type of material, melting point, thickness, surface roughness. Examples of interaction characteristics are gap width in relation to thickness of packaging material and pressure used by the anvil 41 and the sonotrode 43 during cutting and welding.

In order to reduce, or preferably avoid, the risk of the web 19 getting stuck in the longitudinal welding unit 29, the sonotrode 43 and/or the anvil 41 may have a curvature extending in the first direction D₁ coinciding with the direction of travel of the web 19. Hence, the first and second operation surfaces 47, 49 are rounded as seen in the direction of travel. The welding surface 51 and the cutting edge 53 of the first operation surface 47 are thus curved. The cutting edge 53 has a first radius of curvature R₁ being in the range of 4-80 mm, preferably in the range of 5-50 mm, more preferably in the range of 6-25 mm, e.g. about 10 mm. The curvature of the welding surface 51 is adapted to that of the cutting edge 53.

As regards the anvil 41, a main body of the anvil 41 has a disc shape with a circular cross-section. At the second operation surface 49 there is a second radius of curvature R₂ being in the range of 4-80 mm, preferably in the range of 5-50 mm, more preferably in the range of 6-25 mm, e.g. about 15 mm. In the illustrated embodiment the anvil 41 is stationary when performing welding and cutting. However, the anvil 41 is rotatable and may be rotated when the longitudinal welding unit 29 is not in use for welding. The anvil 41 may then be rotated a few degrees such that another portion of its circumference faces the sonotrode 43. Thereby the wear of the second operation surface 49 may be distributed over the circumference of the anvil 41. In addition, the second radius of curvature R₂ contributes to the desired effect of reducing, or preferably avoiding, the risk of the web 19 getting stuck in the longitudinal welding unit 29. In the illustrated embodiment, wherein the anvil has a circular cross-section, the main direction is defined as a diameter being directed towards the sonotrode 43.

The longitudinal welding units 29a', 29b' of the second embodiment and the first and third longitudinal welding units 29a", 29c" of the third embodiment, i.e. the outer longitudinal welding units have most features in common with that of the first embodiment. Hence, they only weld on one side of the cut.

However, there is a difference between the sonotrodes of the second embodiment and the sonotrode 43 of the first embodiment: In order to come close enough to the tubular web with the welding surface, the sonotrode 43a' is inclined by an angle vₐ' in relation to the planar extension of the tubular web 33'. The angle vₐ' is in the range of 60°-90°, preferably 70°- 90°, more preferably 75°- 85°. The angle 90° corresponds to the orientation of the welding unit 29 in Figure 3, i.e. a vertical orientation. The other sonotrode 43b' is also inclined in relation to the planar extension of the tubular web 33". The angle is in the range of 60°- 90°, preferably 70°- 90°, more preferably 75°- 85°. Typically the inclination angles have the same size but are inclined in opposite directions, as is illustrated in Figures 4 and 5.

As a consequence, the second operation surface 49a' of the anvil 41 a' is no longer parallel to the planar extension of the tubular web 33'. Instead the second operation surface 49a' is angled such that it has a relative orientation to that of the first operation surface 47a' corresponding to that of the first embodiment. As an alternative or a complement, the whole anvil 41 a' may be inclined in relation to the direction of travel.

By inclining the longitudinal welding units 29a', 29b' of the second embodiment it is possible to locate them opposite to each other, such that the longitudinal seals 31 a' and 31 b' are made simultaneously. However, it would also be possible to use welding units like the one of Figure 3 and place one after the other along the direction of travel.

The second longitudinal welding unit 29b" of the third embodiment is suitable for making the longitudinal seal 31b" of Figure 5, wherein there is filling material on both sides of the seal. Hence, it is desirable to weld on both sides of the cut. A longitudinal welding unit of this type may also be used for the making the longitudinal seal 31 of Figure 3, the longitudinal seals 33a' and 33b' of Figure 4 and the outer longitudinal seals 33a", 33c" of Figure 5. In that case also at least a portion of strips 35 located outside the longitudinal seal are welded to each other. The strength of the combined edge strip is higher than would be the case, if the two edge strips were removed separately, i.e. not welded to each other.

The first operation surface 47b" of the sonotrode 43b" comprises a first welding surface 51 b", a second welding surface 52b" and a cutting edge 53", which is located in between the welding surfaces 51 b", 52b". Since there are welding surfaces 51 b", 52b" on both sides of the cutting edge 53", the cut will be located within the longitudinal seal 31 b", such that both tubular webs 31a" and 31b" will have a respective longitudinal seal after the longitudinal cutting has been performed.

The first welding surface 51b" assumes an angle α" being between 60° and 90° in relation to the main direction A" of the sonotrode 43b", preferably the angle α" being in the range from 65° to 85°, more preferably from 70° to 80°, most preferably from 73° to 78°. In the illustrated embodiment, the angle α" is substantially 75°. The second welding surface 52b" assumes an angle β" being between 60° and 90° in relation to the main direction A" of the sonotrode 43, preferably the angle β" being in the range from 65° to 85°, more preferably from 70° to 80°, most preferably from 73° to 78°. In the illustrated embodiment, the angle β" is substantially 75°. Preferably the angles α", β" have the same size but are oriented in opposite directions. The welding surfaces 51 b", 52b" extend all the way to the cutting edge 53", such that there is no interspace between the weld and the cut, i.e. there are no non-welded portions adjacent to the cut. The second operation surface 49 of the anvil is non-angled and hence parallel to the planar extension of the web 19". The welding surfaces 51 b", 52b" comprise a respective welding zone corresponding to that of the sonotrode 43 of the first embodiment.

The illustrated longitudinal welding units all have the welding surfaces and the cutting edge in the sonotrode, but they may also be configured the other way around, such that the first operation surface with the cutting edge is comprised in the anvil and the second operation surface in the sonotrode or there may be a cutting edge in both the anvil and the sonotrode. Further, even if the illustrated embodiments disclose providing the longitudinal seal with ultrasonic welding, heat-melt welding would also be feasible.

As an alternative to the stationary longitudinal welding unit of the illustrated embodiments, Figure 5, the anvil and/or the sonotrode may rotate such that the circumferential speed is the same as that of the web. The anvil and/or the sonotrode may then comprise a rotary disc, such that the circumferential surface comprises or constitutes operations surfaces corresponding to those described above, e.g. such that the same operation surface can cut and weld.

The ultrasonic welding unit 37 for transverse sealing is configured in a corresponding way for the three illustrated embodiments. A sonotrode 55 is located above the tubular web 33 and an anvil 57 is located below the tubular web 33 opposite to the sonotrode 55. The anvil 57 comprises a first operation surface 59 and the sonotrode 55 comprises a second operation surface 61, which is located opposite to the first operation surface 59.

The first operation surface 59 comprises a first welding surface 63, a second welding surface 65 and a cutting edge 67, which is located in between the welding surfaces 63, 65. Since there are welding surfaces 63, 65 on both sides of the cutting edge 67, the cut will be located within the weld. The cutting edge 67 is located at a portion of the first operation surface 59 being adjacent to the narrowest portion of the gap. The cutting edge 67 is adapted to cut through the packaging material. The second operation surface 61 is flat and substantially parallel to the planar extension of the web 19. The welding unit 37 may also be configured the other way around, such that the first operation surface with the cutting edge is comprised in the sonotrode and the second operation surface in the anvil or there may be a cutting edge in both the anvil and the sonotrode. Since the welding unit 37 is adapted to provide a transverse seal 39, the cutting edge 67 extends in the transverse direction T being perpendicular to the direction of travel.

The first welding surface 63 assumes an angle γ being between 60° and 90° in relation to the main direction of the sonotrode 55, preferably the angle γ being in the range from 65° to 85°, more preferably from 70° to 80°, most preferably from 73° to 78°. In the illustrated embodiment, the angle γ is about 75°. The second welding surface 65 assumes an angle δ being between 60° and 90° in relation to the main direction B of the sonotrode 55, preferably the angle δ being in the range from 65° to 85°, more preferably from 70° to 80°, most preferably from 73° to 78°. In the illustrated embodiment, the angle δ is about 75°. Preferably the angles γ, δ have the same size but are oriented in opposite directions. The welding surfaces 63, 65 extend all the way to the cutting edge 67, such that there is no interspace between the weld and the cut, i.e. there are no non-welded portions adjacent to the cut. The welding surfaces 63, 65 comprise a respective welding zone corresponding to that of the sonotrode 43 of the first embodiment.

The transverse welding unit 37 may be displaced in a reciprocating way, e.g. at least one of the sonotrode 55 or the anvil 57 may be adapted to be displaced in a reciprocating way in relation to the other of the sonotrode 55 or the anvil 57 and thus to the tubular web 33, preferably each of the sonotrode 55 and the anvil 57 being adapted to be displaced in opposite reciprocating directions. This may be utilized when making the transverse seal, such that the transverse seal is formed with the gap closed around the tubular web 33. The gap is thereafter temporarily enlarged allowing the tubular web to pass in a temporarily larger gap until it is time for forming the next transverse seal.

In addition, or as a complement, the sonotrode 55 and the anvil 57, may be displaced in the direction of travel together with the tubular web 33 while forming the transverse seal.

It is preferred that the sonotrode 55 and the anvil 57 combine these movements, such that they are moved in a respective rectangular path 69, 71 schematically indicated in Figure 3. A first portion of the path is parallel to and adjacent to the tubular web 33 and represents forming the transverse seal 39, a second portion moves the sonotrode 55/ the anvil 57 away from the tubular web 33, a third portion brings the sonotrode 55/ the anvil 57 back upstream and a fourth portion brings the sonotrode 55/ the anvil 57 into contact with the tubular web 33 again to form the next transverse seal 39.

The forming of the transverse seal may comprise
b1) applying a pressure to the tubular web 33 in a zone 73 corresponding to an intended location of one of the transverse seal 39, thereby moving at least a portion of the filling material away from the zone 73, and thereafter
b2) ultrasonically welding while continuing to apply pressure in the zone 73.

In step b1), the angled welding surfaces 63, 65 may be utilized to help moving the filling material away from the zone.

It is desirable that the width of the first operation surface 59 as seen in the direction of travel is rather short, e.g. in the range of from 0.2 to 4 mm, preferably in the range of from 0.4 to 3 mm, more preferably in the range of from 0.6 to 2 mm, most preferably in the range of from 0.8 to 1.5 mm. Correspondingly, it is also preferred that the width of the second operation surface 61 as seen in the direction of travel is rather short, e.g. in the range of from 0.2 to 4 mm, preferably in the range of from 0.4 to 3 mm, more preferably in the range of from 0.6 to 2 mm, most preferably in the range of from 0.8 to 1.5 mm.

The filling material, which is located in the zone 73 before the pressure is applied, is then more or less removed from the zone 73 in step b1). The filling material may be pressed backwards and/or forwards as seen in the direction of travel. It may then be preferred that there is enough free space at the side of the continuous feed 23 of filling material to allow the filling material behind or in front of the transverse seal 39 to move in the transverse direction T. As an alternative or a complement, the continuous feed 23 of filling material may be loosely packed, such that it can be locally compressed when filling material is pressed away from the zone 73. As yet an alternative or a complement, the packaging material may be expandable, preferably elastically expandable, in at least one direction.

In order to help separating the tubular web 33 in the transverse cut, the arrangement 17 may further comprise a pulling unit, not illustrated, e.g. a nip between a pair of rollers arranged to pull the pouched product in the direction of travel. Thereby the tubular web 33 is tensioned in a controllable way in order to make a separation of one pouched product from the next pouched product easier. The distance between the nip and the cutting edge preferably roughly corresponds to the extension of the pouched product in the direction of travel. Hence, if the arrangement 17 is utilized for manufacturing portion-packed oral pouched snuff products of different sizes, the distance is preferably adjustable.

In order to be able to pull the pouched product 1 filled with portion 3 of the filling material without destroying the pouched product 1 in the nip, at least one of the rolls may be provided with a plurality of ridges, having interspaces between the ridges. The ridges will help to pull the pouched product 1, while the interspaces give room for the filling material. Thereby, it is possible to pull the pouched product 1 through the nip without destroying it. There are at least two ridges. The other roll of the nip may be flat or also comprise ridges.

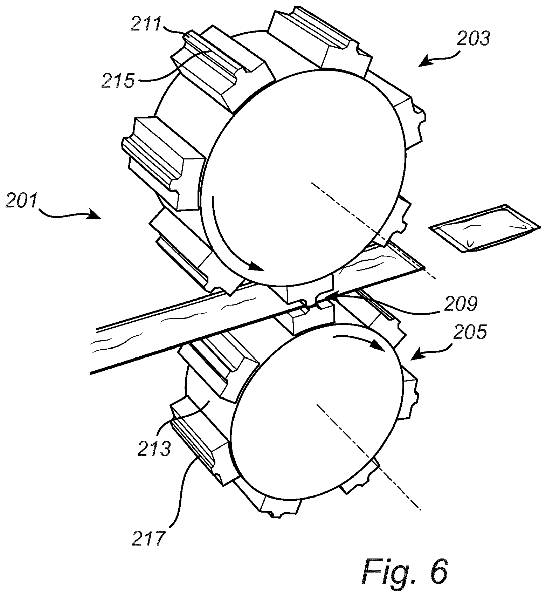

Figure 6 illustrates an alternative ultrasonic welding unit 201 for forming transverse seals comprising a sonotrode 203 and an anvil 205. The alternative welding unit would be useful in any of the illustrated embodiments. The sonotrode 203 comprises a rotary disc. Also the anvil 205 comprises a rotary disc. The rotary discs rotate, such that their circumferential speeds are adapted to the speed of the advancing tubular web. A gap 209 is formed between the sonotrode 203 and the anvil 205, through which gap 209 the tubular web with the enveloped filling material passes. Since the seal is to be made in a transverse direction, the operation surface 211 of the sonotrode 203 is located at the perimeter of the sonotrode 203 and extends in an axial direction of the rotary disc. The sonotrode 203 comprises one or more first operation surfaces 211, in the illustrated embodiment seven, which are evenly distributed in the circumferential direction, such that the distance between two cutting edges 215 correspond to the longitudinal extension I of the pouched product, see Figure 1 a.

Correspondingly, the second operation surfaces 217 of the anvil 205 are located at the perimeter 213 of the anvil 205 and extend in the axial direction. The second operation surfaces 217 of the anvil 205, which are similar to the one illustrated in Figure 3 for the sonotrode 55, are evenly distributed in the circumferential direction of the anvil 205, such that the distance between two second operation surfaces 217 correspond to the longitudinal extension I of the pouched product. As an alternative embodiment, the operation surfaces comprising the cutting edges could instead be located at the anvil 205, or at both the anvil 205 and the sonotrode 203.

With the method and the arrangement described herein, the size of the pouched snuff product may be selected according to preferences. By adjusting the time between forming one transverse seal and forming the next transverse seal in relation to the speed of the tubular web 33, the distance between the transverse seal may be selected in a desired way. Hence it is easy to obtain a desired length l of the pouched product 1, 1'. By adjusting the width of the web 19, the width of the strips 35 and or the distance between the longitudinal welding units 29a', 29b', 29a", 29b", 29c", the width w of the pouched product 1,1' may be selected in a desired way.

Even if the illustrated embodiments show that the web advances horizontally through the arrangement described herein, it is also feasible that the advancing web has another orientation, such as inclined by an angle in the range of 0°-90°, or vertical.

The characteristics of the cut and weld performed by the sealing device as described herein depend on characteristics of the sealing device and of the packaging material and their interaction. Examples of device characteristics are angles of the operation surfaces relative to each other, distance between the operation surfaces, material properties of the anvil and the sonotrode, frequency and energy of the ultra sound of the sonotrode. Examples of packaging material characteristics are type of material, melting point, thickness, surface roughness. Examples of interaction characteristics are gap width in relation to thickness of packaging material and pressure used by the anvil and the sonotrode during cutting and welding.

The frequency used for the sonotrode in the sealing device as described herein may be in the range of from 20 kHz to 45 kHz, e.g. 20 kHz, 35 kHz or 40 kHz. The effect may be in the range of from 100 Watt to 300 Watt. The frequency and the effect are suitably adapted to the material to be welded, and may thus vary for different packaging materials.

The herein disclosed arrangement enables formation of transverse seals in a tubular web of the mesh material enveloping a continuous feed of filling material, the transverse seals being formed across the continuous feed of filling material by means of ultrasonic welding and extending in a transverse direction, T, perpendicular to the direction of travel, L, of the tubular web.

The use of a mesh material which is elastic in at least one direction and comprises fibres of thermoplastic polyamide in the herein disclosed arrangement, enables high-speed production of a deformable oral pouched snuff product having sufficient seal strength in dry state as well as in wet state, the product thus being capable of being repeatedly chewed and deformed without breaking. The resulting oral pouched snuff product comprises a well-filled, deformable pouch providing a user experience more resembling loose snuff than pouched snuff.

### EXAMPLES

The reference material was a dry-laid (carded), bonded nonwoven comprising viscose staple fibres, having a linear mass density of 1.7 decitex and a staple fibre length of 40 mm, and comprising about 35-45 % by weight, based on the total dry weight of the nonwoven, of an acrylic polymer that acts as binder in the nonwoven material. This material is presently used in commercially available smokeless tobacco pouches.

The mesh material used was a warp-knitted mesh material essentially consisting of fibres of polyamide, more particularly PA 6.

### Characterization of materials

The elastic mesh material and the nonwoven reference material were characterized by the following measurements. The results (average values of 5 measurements) are presented in Table 1.

The basis weight of the materials (i.e. mass per unit area) was measured according to standard test method WSP 130.1(05).

Thickness of the materials was measured according to standard test method WSP 120.6(5).

Tensile strength of the materials, in dry state, was measured according to standard test method WSP 110.4(05). The tensile strength was measured both in the machine direction (MD) and in the cross direction (CD) of the material. The MD/CD ratio is obtained by dividing the MD value with the CD value.

The tensile strength index was obtained by dividing the tensile strength value with the basis weight. This was made for the machine direction (MD) and for the cross direction (CD) of the material.

Elongation at break (in %) of the materials in dry state was measured according to standard test method WSP 110.4(05). The elongation at break was measured both in the machine direction (MD) and in the direction transverse to the machine direction, i.e. the cross direction (CD).

Air permeability (in l/m²/s, 2 mbar) of the materials was also measured according to standard test WSP070.1.R3(12). In this test, the air flow passes through the tested material from the face side to the back of the material. The test area was 20 cm². The pressure drop was 200 Pa (2 mbar).

Percentage of open (surface) area of the material can be measured (no data included herein) according to an in-house method of Swedish Match in which a Carl Zeiss Axio Vision stereo microscope is utilized at 2.5X. An image analysis software called ZEN Lite 2013 can be used to make histograms for levels between 0 and 255. The histograms have two peaks, one representing the fibres and one representing the pores. A threshold of level 150 may be used. The threshold is located between the two peaks of the histograms. Hence levels from 0 to 149 are taken as an open surface in the material, i.e. a pore. Percentage of open area is calculated as (no of pixels below 150)/(total no of pixels) expressed as %.

The porosity (pore volume distribution) of the material may be measured using liquid extrusion porosimetry (LEP). This method is, for instance, described in Jena, Akshaya; Gupta, Krishna, Advances in Filtration and Separation Technology (2003), 16, 133-138.

### Example 1: Measurement of seal strength resulting from heat-melt welding and ultrasonic welding

The elastic mesh material as well as the nonwoven reference material was heat-melt welded and ultrasonically welded and the seal strength of the resulting samples was measured.

### Heat-melt welding

A strip of the nonwoven reference material having a length of about 1 m in the machine direction, MD, of the material and a width of 4 cm in the cross direction, CD, of the material was cut out. The strip was double-folded to obtain a two-layered material, which was about 4 cm x 50 cm.

The two layers of the double-folded strip were welded to each other along the CD direction as well as along the MD direction of the material in a HS-2 laboratory heat sealer from RDM equipment. The dimensions of upper and lower seal bars were 50 mm x 5 mm. The seal bars were applied such that the 50 mm direction was perpendicular to the length direction of the double-folded strip.

The upper seal bar was heated to about 300°C when welding the nonwoven reference material. The lower seal bar was not heated. The force used to press the seal bars against the material was 240 N and the contact time was 0.06 seconds when welding the nonwoven reference material..

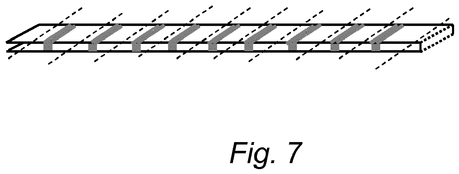

A number of seals, each seal having a seal width of 5 mm, were formed in the double-folded strip; see thick grey lines in Figure 7. The samples to be measured were then made by cutting at about 5 mm from the seal at one side and at about 50 mm from the seal on the other side of the seal, see dashed lines in Figure 7.

A strip of the mesh material having a length of about 1 m in the MD direction of the material and a width of 8 cm in the CD direction of the material was cut out. The strip was double-folded to obtain a two-layered material, which was about 8 cm x 50 cm.

It was found to be impossible to seal the layer of the double-folded strip of mesh material by heat melt welding, using the above mentioned laboratory heat sealer, at temperatures within the range of from 120 to 200°C. Moreover, at a temperature of above 225°C, the material melts/breaks and no weld is formed. Thus, the temperature range, about 210 - 220°C, in which a useful heat melt weld may be created is very narrow while using the elastic mesh material. This means that it is very difficult or even impossible to use such material in conventional high-speed snus pouch apparatus using heat melt welding.

In order to anyhow measure the seal strength obtained when heat melt welding the mesh material within this narrow temperature range using the laboratory heat sealer, each of the upper and lower seal bars was heated to about 215°C when heat melt welding the elastic mesh material. The force used to press the seal bars against the material was 240 N and the contact time was 0.16 seconds when welding the elastic mesh material. The samples to be measured were cut out in the same way as described above for the nonwoven material.

### Ultrasonic welding

A strip of the nonwoven reference material having a length of about 1 m in the MD direction of the material and a width of 4 cm in the CD direction of the material was cut out. The strip was double-folded to obtain a two-layered material, which was about 4 cm x 50 cm.

A strip of the mesh material having a length of about 1 m in the MD direction of the material and a width of 8 cm in the CD direction of the material was cut out. The strip was double-folded to obtain a two-layered material, which was about 8 cm x 50 cm.

For each material, the two layers were welded to each other along the CD direction as well as along the MD direction of the material using Swiss Sonic Viper XL 35-900 ultrasonic welding apparatus (amplitude 90). The seal width of the resulting weld was about 1 mm.

A number of seals, each seal having a seal width of about 1 mm, were formed in the double-folded strip. The double-folded strip was ultrasonically welded and simultaneously cut in the welded area.

The elastic mesh material as well as the reference material was ultrasonically welded in accordance with above.

### Test Method A: Measurement of seal strength of heat melt welded material

Seal strength of the reference material and the elastic mesh material, in dry state as well as in wet state, was measured according to an in-house method of Swedish Match.

The wet state samples had been soaked in water prior to measurement. Five material samples were all placed together in 80 ml distilled water for 15 minutes.

The strength of the seal was measured using an Instron tensile tester model 5943. One layer of the doubled-folded strip was attached to the upper gauge at the side cut 50 mm from the seal and one layer of the doubled-folded strip to the lower gauge at the side cut 50 mm from the seal. The force needed to peel apart the seal was determined and expressed as average load/width in the unit N/mm. The average load was calculated based on the 20 highest peaks in the measurement interval.

Settings of instrument during measurement were as follows:

| | |
|---|---|
| load range: | 50 N |
| gauge length: | 13 mm |
| speed: | 30 mm/min |
| preload: | 0.1 N |
| sample width: | 40 mm |

The results (average values of 10 measurements for dry state and average values of 5 measurements for wet state) are presented in Table 1. Standard deviation is included in Table 1 for the seal strength measurements.

### Test Method B: Measurement of seal strength of ultrasonically welded material

Seal strength of the reference material and the elastic mesh material, in dry state as well as in wet state, was measured according to an in-house method of Swedish Match.

The wet state samples had been soaked in water prior to measurement. Five material samples were all placed together in 80 ml distilled water for 15 minutes.

The strength of the seal was measured using an Instron tensile tester model 5943. One layer of the doubled-folded strip was attached to the upper gauge at the side cut 20 mm from the seal and one layer of the doubled-folded strip to the lower gauge at the side cut 20 mm from the seal. The force needed to peel apart the seal was determined and expressed as load/width at maximum load in the unit N/mm (only a single peak at maximum load). Settings of instrument during measurement were as follows:

| | |
|---|---|
| load range: | 50 N |
| gauge length: | 13 mm |
| speed: | 30 mm/min |
| preload: | 0.1 N |
| sample width: | 20 mm |

The results (average values of 10 measurements for dry state and average values of 5 measurements for wet state) are presented in Table 1. Standard deviation is included in Table 1 for the seal strength measurements.

**Table 1**

| Parameter | Unit | Elastic mesh material | Reference material |
|---|---|---|---|
| Thickness | mm | 0.21 | 0.18 |
| Basis weight | g/m² | 19 | 29 |
| Tensile strength, MD | N/mm | 2.3 | 1.5 |
| Tensile strength, CD | N/mm | 0.6 | 0.3 |
| Tensile strength index, MD | Nm/g | 121 | 51 |
| Tensile strength index, CD | Nm/g | 31 | 10 |
| Elongation at break, MD | % | 29 | 8 |
| Elongation at break, CD | % | 270 | 30 |
| Air permeability | l/m²/s | > 13 000 | 4 400 |
| Heat melt weld, seal strength, dry state, MD (average load/width) Test method A | N/mm | 0.13 ± 0.03 | 0.15 ± 0.01 |
| Heat melt weld, seal strength, dry state, CD (average load/width) Test method A | N/mm | 0.11 ± 0.05 | 0.11 ± 0.01 |
| Heat melt weld, seal strength, wet state, MD (average load/width) Test method A | N/mm | 0.12 ± 0.05 | 0.12 ± 0.01 |
| Ultrasonic weld, seal strength, dry state, MD (load/width at max load) Test method B | N/mm | 0.35 ± 0.06 | 0.23 ± 0.03 |
| Ultrasonic weld, seal strength, dry state, CD, (load/width at max load) Test method B | N/mm | 0.21 ± 0.02 | 0.21 ± 0.01 |
| Ultrasonic weld, seal strength, wet state, MD (load/width at max load) Test method B | N/mm | 0.26 ± 0.07 | 0.08 ± 0.03 |

The data shows that the elastic mesh material have higher MD tensile strength as well as higher CD tensile strength, and higher MD elongation as well higher CD elongation in comparison to the reference material.

The seal strength data show that the elastic mesh material upon ultrasonic welding provides sufficient seal strength in dry state as well as in wet state.

When producing oral pouched snuff products from the elastic mesh material using the herein disclosed arrangement, the seal strength of the transverse seals of the resulting pouch is measured in the machine direction of the material and the seal strength of the transverse seals of the resulting pouch is measured in the cross direction (transverse to the machine direction) of the material.

### Example 2: Ability to withstand aggressive flavors known to affect seal strength

Samples of the ultrasonically welded and the heat melt welded elastic mesh material and the nonwoven reference material prepared as described in Example 1, were placed in a first compartment of a two-compartment container. A flavor (in oil form) known to impair seal strength was placed in the other compartment. The flavor is also known to dissolve the binder present in nonwoven material normally used and thereby impair the tensile strength thereof.

The container was thereafter closed and the samples were stored in the container for two days (about 48 hours). Thereafter, the seal strength of each sample was measured.

The results (average values of 10 measurements for seal strength and average values of 5 measurements for tensile strength) are presented in Table 1. Standard deviation is included in Table 2 for the seal strength measurements.

**Table 2**

| Parameter | Unit | Elastic mesh material after 2 days | Reference material after 2 days |
|---|---|---|---|
| Heat melt weld, seal strength, dry state, MD (average load/width) | N/mm | 0.12 ± 0.04 | 0.07 ± 0.01 |
| Test method A | | (initially 0.13 ± 0.03; see Table 1) | (initially 0.15 ± 0.01; see Table 1) |
| Ultrasonic weld, seal strength, dry state, MD (load/width at max load) | N/mm | 0.32 ± 0.09 | 0.09 ± 0.04 |
| Test method B | | (initially 0.35 ± 0.06; see Table 1) | (initially 0.23 ± 0.03; see Table 1) |
| Tensile strength, CD | N/mm | 0.5 | 0.2 |
| | | (initially 0.6; see Table 1) | (initially 0.3; see Table 1) |

The results in Table 2 show that the seal strength of ultrasonically welded elastic mesh material is essentially preserved in presence of a flavor known to impair the seal strength of heat-melt welded materials normally used for oral pouched snuff products.

### Example 3: Preservation of seal strength upon storage of oral pouched snuff product

A tobacco composition (snus composition), having moisture content of about 50-60% w/w, such as 56% w/w, based on the total weight of the composition, is portion-packed in pouches of the elastic mesh material of Example 1 using the herein disclosed arrangement utilizing ultrasonic welding for sealing the pouches.

The same tobacco composition is also portion-packed in pouches of the nonwoven reference material of Example 1 using conventional portion-packing apparatus utilizing heat melt welding for sealing the pouches.

The seal strength of some of the resulting oral pouched snus products is measured. Some of the resulting pouched snus products are stored in a refrigerator for about 3 weeks. Thereafter, the seal strength of the stored products is measured.

## Claims

1. An oral pouched snuff product comprising a filling material and a saliva-permeable pouch enclosing the filling material, the saliva-permeable pouch comprising at least one elongated seal and the saliva-permeable pouch comprising a mesh material being elastic in at least one direction and comprising fibres of thermoplastic polyamide, **characterized in** the at least one elongated seal having a seal strength of at least 0.10 N/mm as measured in dry state using the herein disclosed method for measuring seal strength, herein being referred to as Test Method B.

2. An oral pouched snuff product according to claim 1, wherein the at least one elongated seal has a seal strength of at least 0.10 N/mm as measured in wet state using the herein disclosed method for measuring seal strength, herein being referred to as Test Method B.

3. An oral pouched snuff product according to claim 1 or claim 2, wherein the mesh material of the saliva-permeable pouch is a knitted material, such as a warp-knitted material.

4. An oral pouched snuff product according to any of the preceding claims, wherein the mesh material of the saliva-permeable pouch has an elongation at break of at least 150%, as measured according to standard test method WSP 110.4(05).

5. An oral pouched snuff product according to any of the preceding claims, wherein the mesh material of the saliva-permeable pouch consists of fibres of thermoplastic polyamide, such as polyamide 6.

6. An oral pouched snuff product according to any of the preceding claims, wherein the at least one elongated seal has a seal width being equal to or less than 2 mm, such as within the range of from 0.1 mm to 2 mm or from 0.1 mm to 1 mm or from 0.1 mm to 0.5 mm, and said at least one elongated seal sealing an outermost end portion of said saliva-permeable pouch.

7. An oral pouched snuff product according to any of the preceding claims, wherein said at least one elongated seal is an ultrasonically provided weld.

8. An oral pouched snuff product according to claim 7, wherein the ultrasonically provided weld is formed by simultaneous ultrasonic welding and cutting of the packaging material such that a cut is provided in a welded area, thereby at least one outermost end portion of the pouch being sealed by the at least one elongated seal.

9. An oral pouched snuff product according to any of the preceding claims, wherein the oral pouched snuff product has a longitudinal direction and a transverse direction perpendicular to said longitudinal direction, said saliva-permeable pouch comprising a first elongated seal and a second elongated seal, each of said first and second elongated seals having a seal length extending along said transverse direction of said product and a seal width extending along the longitudinal direction of the product, the seal width of each of said first elongated seal and said second elongated seal being equal to or less than 2 mm, such as within the range of from 0.1 mm to 2 mm or from 0.1 mm to 1 mm or from 0.1 mm to 0.5 mm, said first elongated seal sealing a first outermost end portion of the pouch, and said second elongated seal sealing a second outermost end portion of said saliva-permeable pouch.

10. An oral pouched snuff product according to any of the preceding claims, which is an oral pouched smokeless tobacco product, said oral pouched smokeless tobacco product having moisture content within the range of from 40 to 60% w/w, such as from 45 to 55% w/w or from 50 to 55% w/w, based on the total weight of the product.

11. An oral pouched snuff product according to claim 10, which is a non-post-moisturized oral pouched smokeless tobacco product.

12. An oral pouched snuff product according to claim 10, which is a post-moisturized oral pouched smokeless tobacco product.

13. An oral pouched snuff product according to any one any of the preceding claims, wherein the filling material is a smokeless tobacco composition comprising cut tobacco.

14. A method for producing an oral pouched snuff product in accordance with any one of claims 1-13, the method comprising:
a) supplying and advancing a tubular web of the mesh material enveloping a continuous feed of filling material in a direction of travel (L);
b) forming transverse seals in said tubular web across said continuous feed of filling material by means of ultrasonic welding, said transverse seals extending in a transverse direction (T) being perpendicular to said direction of travel (L),
c) cutting the tubular web along the transverse direction, thereby forming a plurality of oral pouched snuff products.

15. A method according to claim 14, wherein said ultrasonic welding and cutting are performed simultaneously thereby providing a cut in a welded area.
